# EUROPEAN PATENT SPECIFICATION

(11) **EP 0 816 050 B1**
(45) Date of publication and mention of the grant of the patent: **31.10.2001**
(21) Application number: 97109908.0
(22) Date of filing: 18.06.1997
(51) Int. Cl.: B29C 53/62, B29C 47/76

(54) **Process and equipment for manufacturing pipes from recycled thermoplastic resins**
Verfahren und Vorrichtung zum Herstellen von Rohren aus wiederverwendetem thermoplastischem Kunststoff
Procédé et dispositif pour la fabrication de tubes en matière thermoplastique recyclée

(30) Priority: 25.06.1996 IT MI961282
(43) Date of publication of application: 07.01.1998
(73) Proprietor: Scotto, Camillo, 29015 Castelsangiovanni PC (IT); Tosca, Bruno, 27040 Arena PO, (PV) (IT)
(72) Inventor: Scotto, Camillo, 29015 Castelsangiovanni PC (IT); Tosca, Bruno, 27040 Arena PO, (PV) (IT)
(74) Representative: La Ciura, Salvatore

(56) References cited:
- EP-A- 0 535 326
- EP-A- 0 584 501
- WO-A-96/02785
- DE-A- 4 409 944
- FR-A- 2 218 987
- US-A- 3 477 891
- US-A- 3 938 929
- US-A- 4 826 423

## Description

The present invention relates to a process and equipment for manufacturing thermoplastic resin pipes, intended for use particularly for sewage networks and land drainage.

The thermoplastic resins used can consist of high and low density polyethylene, polypropylene, polyvinyl chloride, polystyrene (including foam polystyrene), and heterogeneous mixtures of recycled materials.

These thermoplastic resin pipes are currently manufactured by winding a continuous extruded strip in a spiral on a mandrel.

Italian patent application No. MI 95 A 000925 dated 9 May. 1995, published on 11 November 1995, describes a manufacturing method for coextruded pipes that makes use of a continuous extrusion with at least one longitudinal inner cavity, possibly filled with recycled materials, and covered on the outside with higher quality plastic.

This method, though being more advantageous than the others, in that it can use low quality materials for the inner extrusion, presents the drawback that it must be of considerable thickness, in order to achieve acceptable welding between the sides of the extruded strips.

US-A-4826423 discloses a process for manufacturing resin plastic pipes comprising:
extrusion of a continuous strip (83) as a flat sheet of thermoplastic resin; winding of the strip (3) in a spiral on a shaping mandrel (1) with partial overlapping of the individual turns, to obtain a basic pipe; application on said basic pipe of an outer reinforcing strip (4) wound in a spiral and welded to the basic pipe, as well as an equipment comprising an extruder (2) for thermoplastic materials equipped with a flat heat die for extrusion of a continuous strip (3) in sheet form; a shaping mandrel (1) en which said continuos strip (3) is wrapped in a spiral with partial overlapping of adjacent turns to obtain a basic pipe; an extrusion head (2) for a reinforcing strip (4) wrapped in a spiral on the basic pipe.

This method presents the drawback to be too expensive, because it does not use low quality materials.

The aim of the invention is to provide a method and an apparatus for producing at low cost a pipe having enhanced structural characteristics. The aim of the invention is also to provide such a pipe.

This aim is reached, in accordance with the invention, with the characteristics listed in the attached independent claims.

Preferred embodiments of the invention emerge from the dependent claims.

Further characteristics of the invention will be made clearer by the detailed description that follows, referring to a purely exemplary, and therefore non-limiting, embodiment illustrated in the attached drawings, in which:
- Figure 1 is a schematic view from the outside of a pipe obtained with the procedure according to the invention;
- Figure 2 is a longitudinal section of a wall of the pipe, on which are shown, by way of example, different designs for the reinforcing strip;
- Figure 3 is a schematic plan view of the essential elements of an equipment for manufacturing the pipe according to the invention;
- Figure 4 shows a pipe being formed on the shaping mandrel;
- Figure 5 schematically illustrates forming of the reinforcing strip.

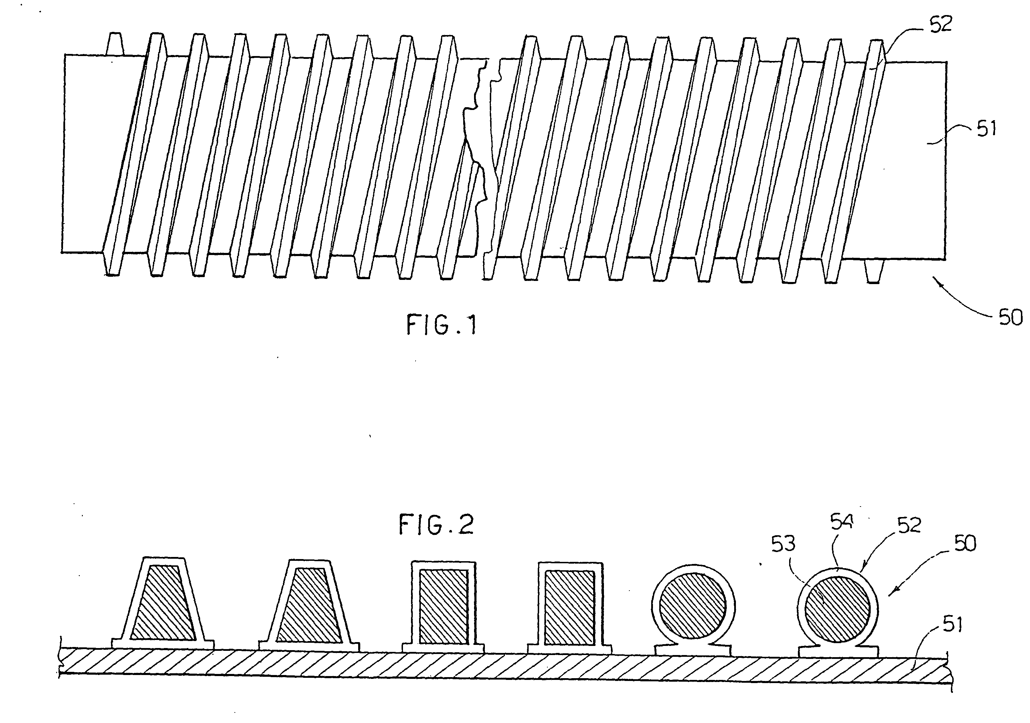

Figure 1 shows a pipe, indicated as a whole with reference number 50, obtained with the process and with the equipment according to the invention.

A pipe 50 comprises a body or basic pipe 51 with a smooth cylindrical wall, and an outer reinforcement 52, consisting of a spiral wound around the basic pipe 51.

The basic pipe 51 is made of thermoplastic material, whilst the reinforcing strip 52, which can have various shapes, as illustrated. in Figure 2, comprises a heterogeneous recycled material 53, acting as a filler, and an outer covering layer 54, of thermoplastic material, which is welded to the outer wall of the basic pipe 51.

In this way, the thickness of the basic pipe 51 can be smaller than that of conventional pipes of the same diameter, its strength being ensured by the outer reinforcing strip 52.

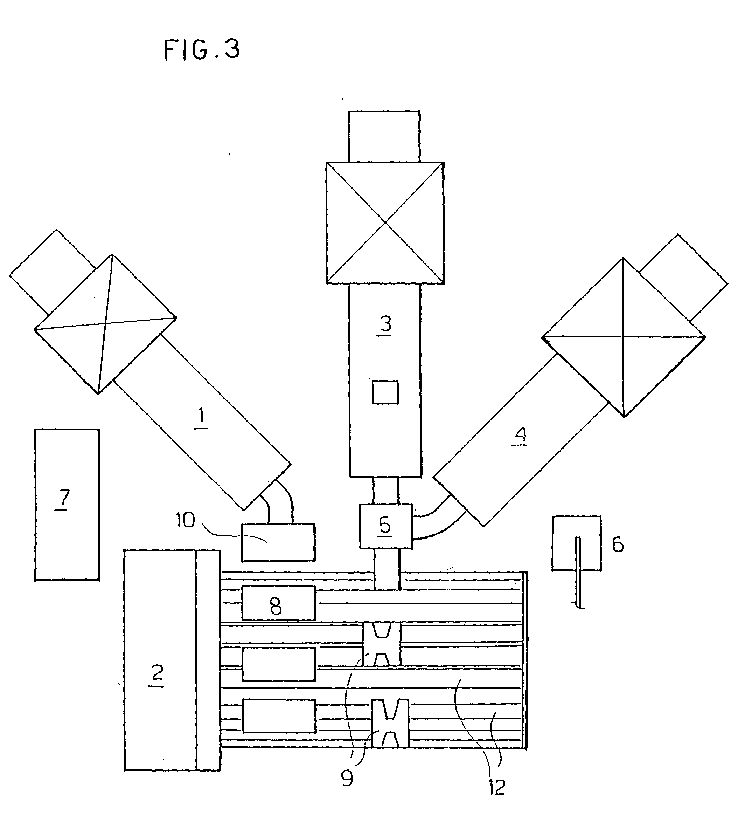

Figure 3 schematically illustrates equipment for manufacturing the pipe 50 according to the invention.

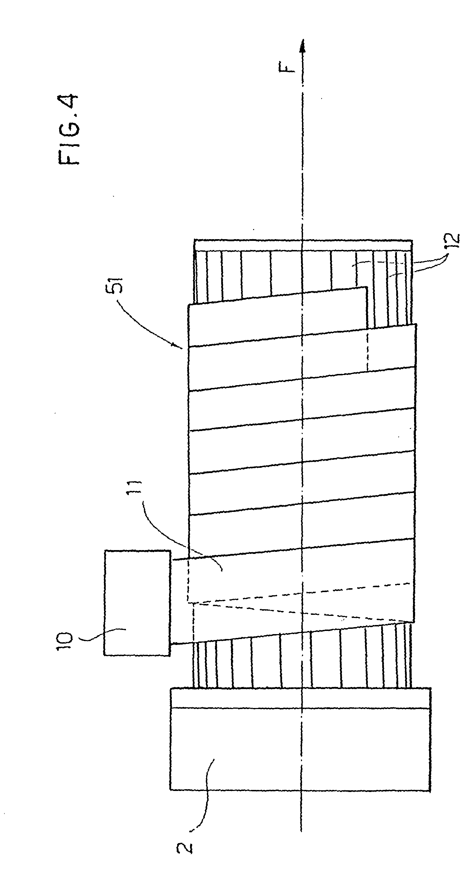

This equipment comprises an extruder 1 (double- or single-screw) with a flat-head die 10 from which a sheet or strip 11 emerges (Figure 4), for formation of the basic pipe 51, winding it in a spiral on a shaping mandrel 2, as will be better explained below.

The shaping mandrel 2 consists of a variable speed drive which, by means of gearing (not illustrated), sets in motion a series of rollers 12, on which the strip extruded as a sheet 11 by the flat head 10 is wound in a spiral. The rotating rollers 12 can be inclined with respect to the central axis of the shaping mandrel 2, and this inclination determines the pitch of the single turns of the wound strip, which advance on the mandrel in the direction of the arrow F in Figure 4, partly overlapping on each other and giving rise, after they have been welded, to the continuous basic pipe 51.

The equipment also comprises a second extruder (double- or single-screw) 3, provided with a degassing device, for plastification of the heterogeneous recycled materials forming the inner part 53 of the reinforcing strip 52.

Alongside the extruder 3, a third extruder 4 (double-screw or single-screw) is provided, for plastification of the outer layer 54 of the reinforcing strip 52.

The two extruders 3 and 4 converge in a coextruding head 5, from which the reinforcing strip 52 emerges.

In figure 3 reference number 8 indicates pressure rollers that press the strip 11 extruded by the flat head 10 against the rollers 12 of the shaping mandrel, whilst 9 indicates the pressure rollers for the reinforcing strip 52. The pressure rollers 9 are offset axially to allow the spiral to be formed on the basic pipe 51. Downstream of the shaping mandrel 2 a cutting station is situated, schematised in Figure 3 and indicated by reference number 6, consisting of a circular saw synchronised with feeding of the pipe 50, which allows a cut to be made perfectly at right angles to the axis of the pipe.

In Figure 3, lastly, the number 7 indicates a block showing the control panel for all the operations necessary for running of the equipment.

The equipment according to the invention is operated, thus carrying out the relative procedure, already described in part above, as follows:

When the extruder 1 is started, the sheet 11 of thermoplastic material leaving the flat head 10 is deposited on the rotating rollers 12 of the shaping mandrel 2 and, overlapping on the preceding turn with each revolution of the mandrel, determines the shape and thickness of the basic pipe 51. The rotating rollers, depending on the pre-set inclination with respect to the axis of the mandrel, give rise to the feed pitch of the extruded sheet 11 and, at the same time, the layers that are to be placed one on top of the other to obtain different pipe section thickness. The pressure rollers 8 ensure perfect welding of the single layers.

The reinforcing strip 52, on leaving the coextrusion head 5, falls on the outer surface of the basic pipe 51 and is drawn by the latter through the rotation transmitted by the shaping mandrel 2. Immediately after the point of contact, the reinforcing strip 52 encounters a shaped pressure roller 9 that determines its shape, also helping it to adhere to the outer surface of the basic pipe 51. Suitable preheating systems are used to ensure optimal welding, The other shaped rollers 9, orientated according to the pitch, contribute to shaping, welding and cooling of the reinforcing strip.

All the rollers and pressure rollers of the shaping mandrel 2 are connected to a thermostated fluid circuit in order to control cooling of the thermoplastic materials adequately and thus establish production efficiency levels.

The use of heterogeneous plastic products to form the filling layer 53 of the reinforcing strip 52 gives rise during plastification in the extruder 3, to the formation of decomposition gases given off by non-thermostable products and evaporation of the moisture contained in them. To obtain a uniform plastic mass in the reinforcing strip, such as to enhance its structural characteristics, it is preferable to work with an extruder equipped with vacuum degassing.

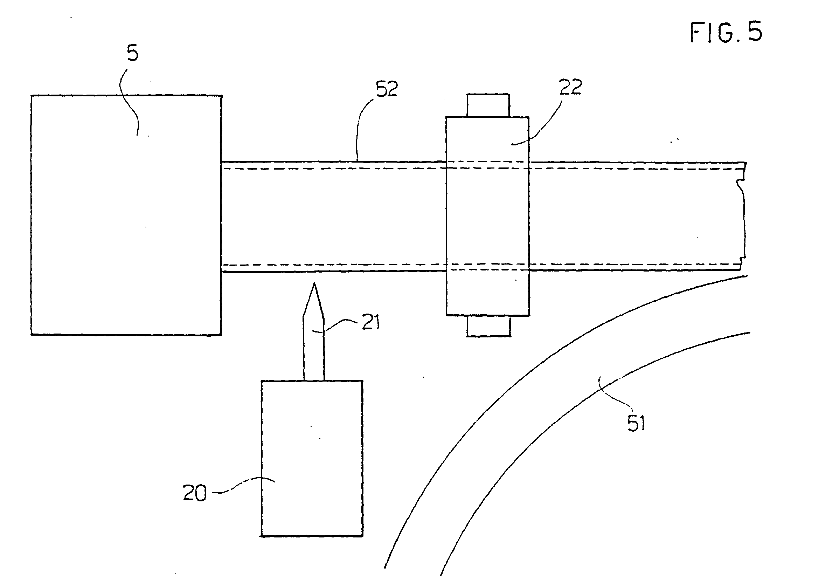

The residual gases generated at the outlet from the coextrusion head 5 are further reduced by using a special apparatus 20 equipped with a needle element 21 to make holes at close intervals on the surface of the reinforcing strip that will then be welded to the basic pipe 51, thus closing the holes, as shown schematically in figure 5.

Downstream of the perforating apparatus 20, suitably orientated squeeze rollers 22 are provided, their purpose being to expel the gases through the holes made with the needle 21.

The procedure described for manufacturing of buried pipes makes it possible, by acting on the production parameters, to obtain products with different characteristics that comply with the technical standards imposed by the current international regulations for the sector.

This procedure makes it possible to manufacture a product 50 for use in sewage pipes and drainage using as the structural reinforcing element heterogeneous thermoplastic materials coming from separate collection of solid municipal refuse.

A basic element of this solution is the possibility of obtaining high mechanical strengths from heterogeneous materials by exploiting them as stiffening fillers.

The thermoplastic material used for the basic pipe 51 and for the outer layer 54 of the reinforcing strip 52 can equally be obtained from recycling of homogeneous good-quality thermoplastic materials, ensuring that the finished product has a very low cost.

Last but not least, it must be considered that heterogeneous plastic residues are difficult to dispose of and that the presence of polyvinyl chloride precludes their incineration in many of the existing plants.

The use foreseen for said materials in the described process is therefore the most suitable from all points of view.

## Claims

1. A process for manufacturing thermoplastic resin pipes, comprising the following steps:
a) extrusion of a continuous strip (11) as a flat sheet of thermoplastic resin;
b) winding of the strip (11) in a spiral on a shaping mandrel (2), with partial overlapping of the individual turns, to obtain a basic pipe (51);
c) application on said basic pipe (51) of an outer reinforcing strip (52) wound in a spiral and welded to the basic pipe, said outer reinforcing strip (52) comprising an inner filling layer (53) made of a heterogeneous recycled material and an outer layer of the same thermoplastic material as the basic pipe (51);
d) coextruding the inner filling material (53) and the outer layer (54) for producing the reinforcing strip;
e) degassing the residual gases generated at the outlet from the coextrusion head by perforating and squeezing the coextruded reinforcing strip by means of squeeze rollers.

2. A process according to claim 1, **characterised in that** it provides for degassing during plastification of said filling material (53) for the reinforcing strip (52).

3. Equipment for manufacturing thermoplastic resin pipes (50) of the kind comprising:
a) an extruder (1) for thermoplastic materials equipped with a flat head die (10) for extrusion of a continuous strip in sheet form (11);
b) a shaping mandrel (2) equipped with a series of rotating rollers (12) on which said continuous strip (11) is wrapped in a spiral with partial overlapping of adjacent turns to obtain a basic pipe (51),
c) a coextrusion head (5) for a reinforcing strip (52) wrapped in a spiral on the basic pipe (51), said coextrusion head being fed by two extruders (3, 4), for a filling material (53) and for an outer layer (54), respectively, that converge upon said coextrusion head (5), together giving rise to the reinforcing strip (52),
d) a degassing station provided downstream of said coextrusion head (5) comprising a perforating apparatus (20, 21) and squeeze rollers (22).

4. Equipment according to the preceding claim 3, **characterised in that** it provides for shaped pressure rollers (9) to be coupled with the rollers (12) of the shaping mandrel (2), to give the desired shape to said reinforcing strip (52).

5. A thermoplastic resin pipe for sewage networks or land drainage, made with the process according to claims 1 or 2, comprising a cylindrical basic pipe (51) on the outer surface of which is applied a reinforcing strip (52) consisting of an outer layer (54) of the same thermoplastic material as the basic pipe and an inner filling layer (53), **characterized in that** said inner filling layer (53) is made of heterogeneous recycled material coextruded with the outer layer (54) and **in that** said outer layer (54) has perforations for degassing residual gases generated by the recycled material during production of said pipe.

## Patentansprüche

1. Verfahren zum Herstellen von Rohren aus thermoplastischem Harz, welches die folgenden Schritte aufweist:
a) Extrudieren eines kontinuierlichen Streifens (11) als flache Bahn aus thermoplastischem Harz;
b) Wickeln des Streifens (11) in einer Spirale auf einem Formgebungsdorn (2) mit teilweiser Überlappung der einzelnen Wicklungen, um ein Basisrohr (51) zu erhalten;
c) Anbringen eines äußeren Verstärkungsstreifens (53) auf das Basisrohr (51), wobei der Verstärkungsstreifen in einer Spirale gewickelt und auf das Basisrohr geschweißt wird, wobei der äußere Verstärkungsstreifen (52) eine innere Füllschicht (53) aufweist, die aus einem heterogenen rezyklierten Material und einer äußeren Schicht aus demselben thermoplastischen Material wie das Basisrohr (51) besteht;
d) Koextrudieren des inneren Füllmaterials (53) und der äußeren Schicht (44), um den Verstärkungsstreifen zu erzeugen;
e) Entgasen der am Auslaß erzeugten Restgase von dem Extrusionskopf durch Lochen und Ausquetschen des koextrudierten Verstärkungsstreifens mit Hilfe von Quetschwalzen.

2. Verfahren nach Anspruch 1, **dadurch gekennzeichnet, daß** für eine Entgasung während der Plastifizierung des Füllmaterials (53) für den Verstärkungsstreifen (52) gesorgt wird.

3. Anlage zum Herstellen von Rohren (50) aus thermoplastischem Harz, welche aufweist:
a) einen Extruder (1) für die thermoplatischen Materialien, der mit einem flachen Düsenkopf (10) zur Extrusion eines kontinuierlichen Streifens in Form einer Materialbahn (11) ausgestattet ist;
b) einen Formgebungsdorn (2), der mit einer Reihe sich drehender Walzen (12) ausgestattet ist, auf dem der kontinuierliche Streifen (11) in einer Spirale mit teilweiser Überlappung benachbarter Wicklungen aufgewickelt wird, um ein Basisrohr (51) zu erhalten;
c) einen Koextrusionskopf (5) für einen Verstärkungsstreifen (52), der in einer Spirale auf dem Basisrohr (41) aufgewickelt wird, wobei der Koextrusionskopf von zwei Extrudern (3, 4) für ein Füllmaterial (43) bzw. für eine äußere Schicht (54) gespeist wird, die nach dem Koextrusionskopf (5) zusammenlaufen, um miteinander den Verstärkungsstreifen (52) zu erzeugen, wobei eine Entgasungsstation stromab von dem Koextrusionskopf (5) vorgesehen ist, die eine Lochungsvorrichtung (20, 21) und Quetschwalzen (22) aufweist.

4. Anlage nach Anspruch 3, **dadurch gekennzeichnet, daß** sie geformte Druckwalzen (9) vorsieht, die mit den Walzen (12) des Formgebungsdorns (2) verbunden werden sollen, um dem Verstärkungsstreifen (42) die gewünschte Form zu geben.

5. Rohr aus thermoplastischem Harz für Abwassernetze oder Landdrainagen, das mit dem Verfahren nach Anspruch 1 oder 2 hergestellt wird, mit einem zylindrischen Basisrohr (41), an dessen äußerer Oberfläche ein Verstärkungsstreifen (52) angebracht ist, der aus einer äußeren Schicht (54) aus demselben thermoplastischen Materials wie das Basisrohr und einer inneren Füllschicht (53) besteht, **dadurch gekennzeichnet, daß** die innere Füllschicht (53) aus einem heterogenen rezyklierten Material besteht, das mit der äußeren Schicht (54) koextrudiert wird, und daß die äußere Schicht (54) Lochungen zum Entgasen von Restgasen hat, die durch das rezyklierte Material während der Herstellung des Rohres erzeugt werden.

## Revendications

1. Procédé de fabrication de tuyaux en résine thermoplastique, comportant les étapes consistant à :
a) extruder une bande continue (11) de résine thermoplastique sous la forme d'une feuille plate,
b) enrouler la bande (11) en spirale sur un mandrin de mise en forme (2), avec un chevauchement partiel des spires individuelles, pour obtenir un tuyau de base (51),
c) appliquer sur ledit tuyau de base (51) une bande de renforcement extérieure (52) enroulée en spirale et soudée sur le tuyau de base, ladite bande de renforcement extérieure (52) comportant une couche de remplissage intérieure (53) constituée d'un matériau recyclé hétérogène, et une couche extérieure de la même matière thermoplastique que le tuyau de base (51),
d) coextruder le matériau de remplissage intérieur (53) et la couche extérieure (54) pour fabriquer la bande de renforcement,
e) dégazer les gaz résiduels créés au niveau de la sortie à partir de la tête de coextrusion en perforant et en comprimant la bande de renforcement coextrudée par l'intermédiaire de rouleaux pinceurs.

2. Procédé selon la revendication 1, **caractérisé en ce qu'**il assure le dégazage pendant une plastification dudit matériau de remplissage (53) de la bande de renforcement (52).

3. Equipement pour fabriquer des tuyaux en résine thermoplastique (50) du type comportant :
a) une extrudeuse (1) de matières thermoplastiques munie d'une matrice à tête plate (10) pour extruder une bande continue en forme de feuille (11),
b) un mandrin de mise en forme (2) muni d'une série de rouleaux rotatifs (12) sur lesquels ladite bande continue (11) est enroulée en spirale avec un chevauchement partiel des spires adjacentes pour obtenir un tuyau de base (51),
c) une tête de coextrusion (5) d'une bande de renforcement (52) enroulée en spirale sur le tuyau de base (51), ladite tête de coextrusion étant alimentée par deux extrudeuses (3, 4), respectivement pour un matériau de remplissage (53) et une couche extérieure (54), qui convergent sur ladite tête de coextrusion (5), donnant naissance ensemble à la bande de renforcement (52),
d) un poste de dégazage agencé en aval de ladite tête de coextrusion (5), comportant un dispositif de perforation (20, 21) et des rouleaux pinceurs (22).

4. Equipement selon la revendication 3, **caractérisé en ce qu'**il assure que des rouleaux de pression mis en forme (9) sont accouplés aux rouleaux (12) du mandrin de mise en forme (2), pour donner la forme voulue à ladite bande de renforcement (52).

5. Tuyau en résine thermoplastique destiné à des réseaux d'égout ou à des drainages terrestres, fabriqué à l'aide du processus conforme aux revendications 1 ou 2, comportant un tuyau de base cylindrique (51) sur la surface extérieure duquel est appliquée une bande de renforcement (52) constituée d'une couche extérieure (54) fabriquée à partir de la même matière thermoplastique que le tuyau de base et d'une couche de remplissage intérieure (53),
**caractérisé en ce que** ladite couche de remplissage intérieure (53) est constituée d'un matériau recyclé hétérogène coextrudé avec la couche extérieure (54), et **en ce que** ladite couche extérieure (54) a des perforations pour un dégazage des gaz résiduels créés par le matériau recyclé pendant la fabrication dudit tuyau.
